# EUROPEAN PATENT APPLICATION

(11) **EP 3 944 926 A1**
(43) Date of publication of application: **02.02.2022**
(21) Application number: 21184979.9
(22) Date of filing: 12.07.2021
(51) Int. Cl.: B24B 7/19, B24B 7/28, B24B 27/00, B24B 51/00, G05B 17/00

(54) **MACHINE FOR WORKING WOODEN WORKPIECES AND THE LIKE, PROVIDED WITH A PROGRAM FOR ACQUIRING AND PROCESSING IMAGES, AND OPERATING METHOD THEREOF**

(30) Priority: 31.07.2020 IT 202000018826
(71) Applicant: SCM Group S.p.A., 47921 Rimini (RN) (IT)
(72) Inventor: VENTURINI, Marco, 47921 Rimini (IT)
(74) Representative: Tiburzi, Andrea

(57) **Abstract**

The present invention relates to a machine (M) for working workpieces (P) made of wood, metal, plastic, ceramic, glass, fiberglass for carrying out a working on said workpiece (P) reproducing an input data (I), as an image or a sample, comprising: at least one working group (2) provided with at least one working tool (21) having a specific shape and capable of carrying out the working on said workpiece (P) according to specific trajectories, said working tool (21) moved according to specific laws of motion; a working table (1) for supporting and moving said workpiece (P) to be worked, according to a forward direction (A), during the working process; a logic control unit (U) provided with storage means in which links between said at least one working group (2) and the respective working operation that it can carry out on said workpiece (P) are stored; said machine being characterized in that said logic control unit (U) is provided with a program for acquiring and processing said specific input data (I) capable of acquiring said input data (I); processing said input data (I) for extracting output data such as the law of motion that said at least one working group (2) has to follow for working said workpiece (P), so as to reproduce said input data (I) on said workpiece (P), and carrying out the working of said workpiece (P).

The present invention also relates to an operating method of said machine (M).

## Description

The present invention relates to a machine for working wooden workpieces and the like, provided with a program for acquiring and processing images, in particular of manual effects or graphic decorations.

The present invention also relates to an operating method of the machine.

More in detail, the invention relates to a machine of the above type, equipped with an image acquisition and processing program, designed and realized in particular to carry out the sanding, and in particular, the gouging of wooden pieces, but which can be used for any type of working, with which a working acquired and processed from an image can be reproduced on the workpiece, in particular processes that reproduce manual effects or graphic decorations.

Gouging means a particular type of machining or sanding, in which the machined surface of the workpiece is not perfectly flat, but with more or less variously inclined regions, even in an irregular and random way, for example, to provide a result similar to handmade machining.

In the following, the description will be addressed to the simulation of the gouging of wooden pieces, but it is clear that the same should not be considered limited to this specific use.

As is well known at present, the machines that carry out sanding in general, and gouging in particular, on wooden pieces, generally comprise a movable working table, on which the piece to be worked is placed during the movement of the workpiece itself, therefore it is working through type.

Furthermore, known machines comprise a sanding unit and a gouger, typically cylindrical, rotating, comprising a plurality of cutting tools or knives, which is moved by motor means according to predefined programs and according to predefined machining profiles, to obtain the desired final machining.

It is also possible that the processing by the gouger group is left to chance, thus obtaining unpredictable final processing.

Known machines also comprise a user interface, in which the operator selects one or more predetermined machining profiles or curves that the gouging unit can perform, to obtain a certain final machining, such as a particular repeated pattern.

Currently, with known machines it is possible to carry out predefined or unpredictable machining operations, since it is not always possible to associate a final machining with the selection of a combination of tools, which allows obtaining that specific final machining.

Therefore, it appears apparent that known machines have rather rigid operating logics, which, then, do not allow highly variable machining to be carried out, even with decorative and/or artistic contents.

In light of the above, it is therefore an object of the present invention to provide a machine for machining wooden pieces capable of reproducing processes acquired from external and therefore non-predefined images.

Another object of the invention is to provide the method of operation of a machine for processing wooden pieces, in particular of a gouger machine.

It, is therefore, the specific object of the present invention a machine for working workpieces made of wood, metal, plastic, ceramic, glass, fiberglass for carrying out a working on said workpiece reproducing an input data, as an image or a sample, comprising at least one working group provided with at least one working tool having a specific shape and capable of carrying out the working on said workpiece according to specific trajectories, said working tool moved according to specific laws of motion, a working table for supporting and moving said workpiece to be worked, according to a forward direction, during the working process, a logic control unit provided with storage means in which links between said at least one working group and the respective working operation that it can carry out on said workpiece are stored, wherein said logic control unit is provided with a program for acquiring and processing said specific input data capable of acquiring said input data, processing said input data for extracting output data such as the law of motion that said at least one working group has to follow for working said workpiece, so as to reproduce said input data on said workpiece, and carrying out the working of said workpiece.

Further according to the invention, said machine comprises a plurality of working groups, and said logic control unit is capable of processing said input data and extracting output data such as the number of working groups and the law of motion that each one has to follow for working said workpiece, so as to reproduce said input data on said workpiece.

Preferably according to the invention, said machine may comprise a working group of the sanding group type for carrying out the working of said workpiece.

Still according to the invention, said machine may comprise a working group of the gouger type comprising at least one cutting element.

Further according to the invention, said machine may comprise said gouger group comprising a plurality of cutting elements arranged side by side, along a rotation axis, transversal to said forward direction.

Preferably according to the invention, said machine may comprise a plurality of working groups, arranged in series among each other, capable of making the working process determined by said logic control unit during the sliding of said workpiece according to said forward direction, to reproduce on said workpiece, said input data.

Always according to the invention, said logic control unit is capable of extracting, as output data, the number of working operations that said plurality of working groups has to reproduce on said workpiece for reproducing on said workpiece the working of said input data.

It is further object of the present invention an operating method of a machine for working workpiece made of wood, metal, plastic, ceramic, glass, fiberglass for executing a working on said workpiece reproducing an input data, as an image or a sample, comprising the following steps:
a. storing a link among a defined number of working groups and the respective working operations that they can make on said workpiece;
b. providing an input data as an image or a sample;
c. acquiring said input data;
d. processing said input data to extract output data such as the number of working groups necessary for the working operations so as to reproduce said input data;
e. processing said input data so as to extract output data such as trajectories or laws of motion that said working groups, identified in said step d., have to follow so as to reproduce said input data;
f. providing a workpiece to be worked;
g. carrying out the working of said workpiece.

Further according to the invention, said method may comprise the following further steps to carry out before said step f.:
e1. simulating the final working to carry out on said workpiece;
e2. comparing said simulated working in said step e1. and said input data;
e3. if said comparison carried out in said step e2. is positive, proceeding with said step f.
still according to the invention, said method may further comprise the following step
e11. displaying said simulated working in said step e1.

Finally according to the invention, said method may comprise the further step:
e0. determining if said working on said workpiece can be carried out in a single passage or in more passages of said workpiece in said machine, so as to reproduce said input data.

The present invention will be now described, for illustrative but not limitative purposes, according to its preferred embodiments, with particular reference to the figures of the enclosed drawings, wherein:
figure 1 shows a schematic front view of the elements included in the machine for machining wooden workpieces and the like, equipped with an image acquisition and processing program, object of the present invention;
figure 2 shows a perspective view of a part of the machine object of the present invention;
figure 3 shows a side perspective view of a tool of the machine, object of the present invention;
figure 4 shows a schematic front view of an input data such as an image;
figure 5 shows a schematic front view of further input data such as an image;
figure 6 shows a schematic front view of further input data with the processing performed by the acquisition and processing program, object of the present invention;
figure 7 shows an output table of the acquisition and processing program, object of the present invention;
figure 8 shows a schematic view of machining associated with a tool;
figure 9 shows a schematic view of machining associated with a further tool;
figure 10 shows a schematic view of machining associated with another tool; and
figure 11 shows a schematic view of a simulation of a process carried out by the acquisition and processing program, object of the present invention.

In the various figures similar parts will be indicated with the same numerical references.

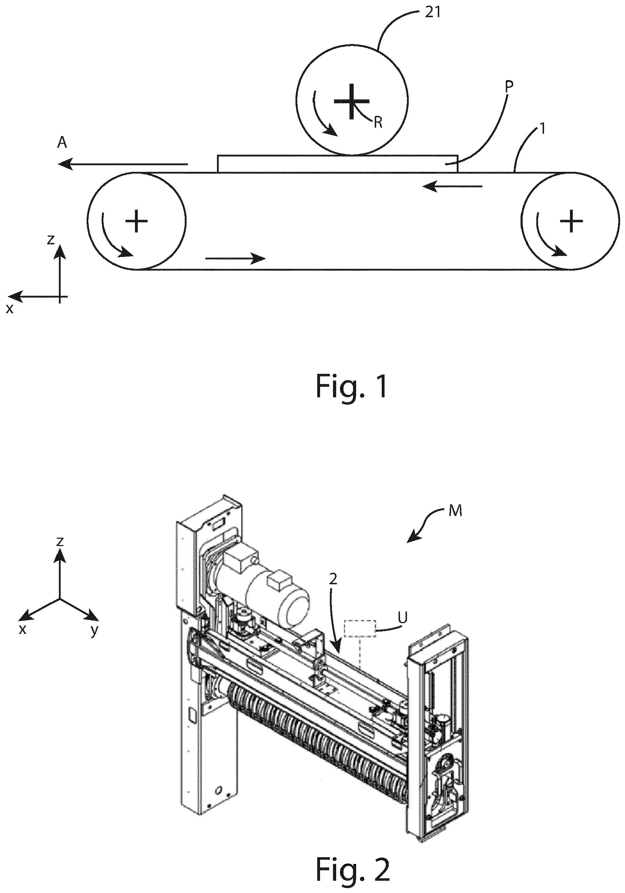

With reference to figures 1 and 2, a working machine has been indicated as a whole with M, in particular a sanding machine that can perform gouging operations on surfaces of workpieces P made of wood, plastic, glass, fiberglass, ceramic, metal, and the like.

As already described, by gouging it is meant a particular type of sanding, in which the machined surface of the workpiece P is not perfectly flat, but provided with more or less variously inclined areas, even according to irregular and random patterns, for example, to provide the impression of handmade machining.

The machine M can allow, in particular, to automatically achieve a finishing effect similar to that of a manual sanding.

In general, the program the machine M is equipped with allows extracting the characteristic curves from an image, or even from a real physical sample, in order to reproduce the effect illustrated in the image or in the real sample with one or more gouge tools.

For simplicity of description, in the following the real image or sample is defined as input data I.

The program then identifies the tool profile or the tools needed, and the number of consecutive passes or groups of tools to replicate the input data.

The machine M essentially comprises a working table 1, on which the workpiece P to be machined is placed, a machining head, equipped with sanding tools, not shown in the figure, at least one machining unit, or more machining units, arranged in series among them, like a gouger, a control logic unit U for the operation of the machine M.

Said working table 1, like an endless conveyor tape or belt rolled on pulleys, can slide along an advancement direction A, parallel to the X-axis of the Cartesian reference system XYZ, on which the workpiece P to be machined is placed, while sliding on the working table 1.

Said gouging unit 2 rotates around a rotation axis R, transversal with respect to said axis X.

Said gouging unit 2 can comprise at least one tool 21, movable by means of a support shaft, which is rotated by a motor, not shown in the figure.

Each tool 21 can comprise one or more cutting elements or knives inside it.

It is possible that said gouging unit 2 comprises a plurality of cutting elements 21, in this case, they are arranged next to each other, along the direction of the rotation axis R of the gouging unit 2.

Said gouging unit 2 is configured to move vertically along an axis parallel to the Z-axis of the Cartesian reference system XYZ, to vary the cut depth on the surface of said workpiece P.

Furthermore, said gouging unit 2 is configured to move laterally along an axis parallel to the Y-axis of the Cartesian reference system.

Said logic control unit U comprises storage means, in which a given number of working group 2 and tools 21 are stored, each of which is associated with the respective machining that it can perform on the workpiece P.

Furthermore, said logic control unit U comprises a 2D and 3D image acquisition and processing program.

In particular, as anticipated, the acquisition and processing program, after having acquired the input data, by means of known techniques, carries out its processing.

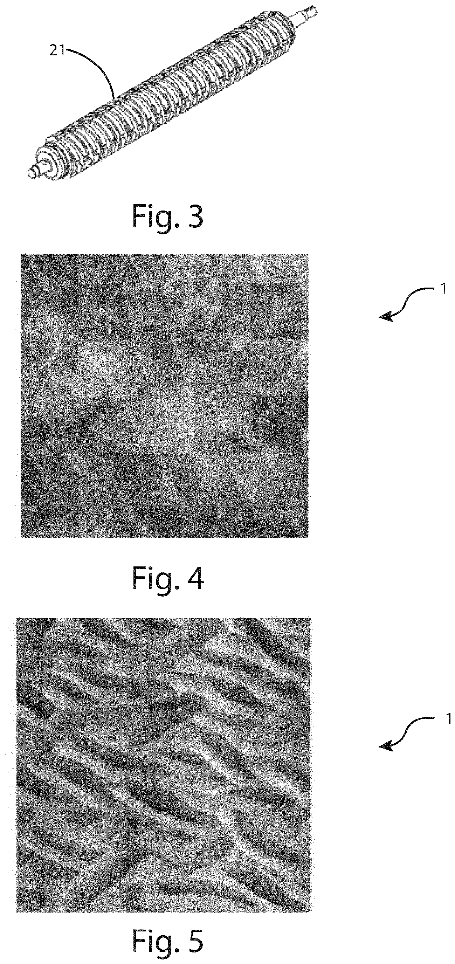

Figures 4 and 5 show examples of input data to be reproduced.

The processing is divided into a first step, called surface analysis, which, through the identification of common areas having common characteristics in the image, allows identifying the profiles or shapes of the necessary tools 21, and through the identification of the trajectory lines by applying an edge analysis, called edge analysis, it is possible to identify the trajectories along which said tools 21 must move, i.e., the laws of motion that move said machining units 2, hence said tools 21.

In the second step, the cusps of the image are defined, so as to determine the displacement of said tools 21 along said Z-axis.

In the third step, the simulation of the machining obtainable by means of the identified tools 21 and the trajectories that each one must follow is carried out.

In the fourth step, a comparison is made, between the simulated machining and the input data, if the comparison is successful, the machining of the workpiece P begins, otherwise, it is necessary to repeat the processing.

As regards the first step, the image profile is processed, using known techniques for detecting and transforming the images for the recovery of statistical information on the trend of the lines and curvature.

The processing used is statistical, and uses the analysis of images through progressive scans to extract information from the pixels characterizing a profile or a reference area related to the space that surrounds them.

The characterization of clusters or characteristics common to areas and paths are the basic elements that allow identifying the suitable shape of said tool 21 and its trajectory.

The characterization of repetitive clusters is classified in the X and Y and Z directions of a sample, in which common elements of surfaces and trajectories are identified.

Each cluster has a characterization of the shape that generates it, and a trajectory.

With reference to figure 5, the program identifies the paths for the single tool 21 that generate the input data to be reproduced, simulating a subtraction between two Boolean solids, a reference solid, and a solid generated with the projection of the generated solid shape, from the shape of the identified tools 21.

In this way, for every single tool 21, the path that has to be followed in order to reproduce the input data is identified.

By using Boolean solids with which subtracting the material on the basis of the identified profiles, it is possible to reconstruct the shape of the tool 21.

Therefore, the program output data are:
- the definition of the shaping/distribution of the tools 21 ;
- the execution trajectory;
- Boolean subtraction processing on a reference solid to verify the status of the acquisition obtained.

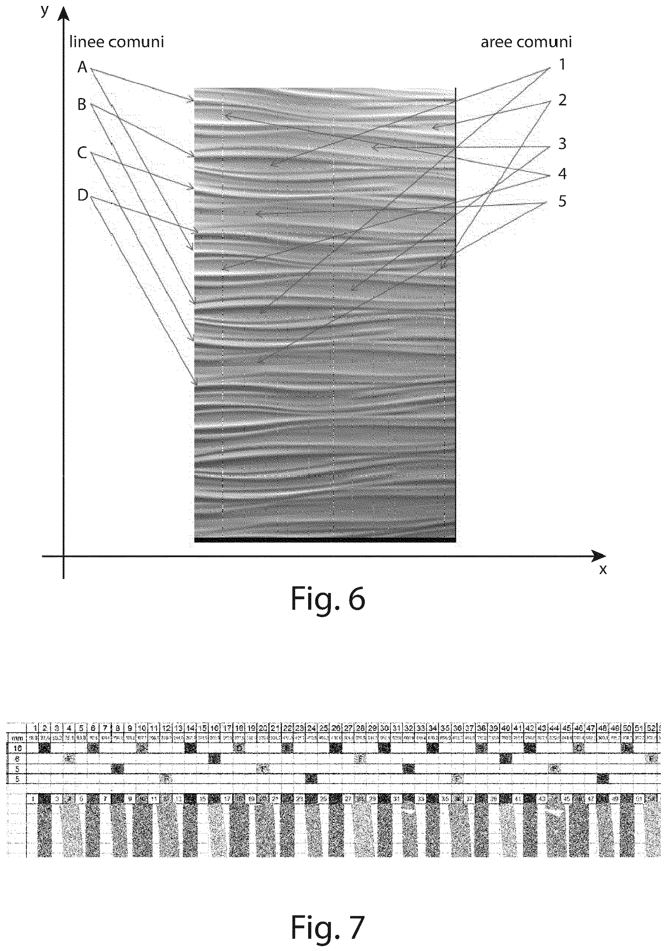

With reference to figure 6, a tool distribution table 21 is created at the output from the program.

Said tool distribution table 21 can be displayed on a machine display or also on other remote devices.

On the basis of the number of discrete positions of the identified tool 21, it is defined in each position which type of knife has to be housed and the definition of phase shifts with the subsequent groups and the type of path to be used.

By performing a Boolean subtraction from the reconstruction of the profile thus created is possible to see the preview of the result.

The result obtained is compared with the number and shapes of possible knives with which setting up the machine and suggests a distribution of knives and curves that allow the starting result.

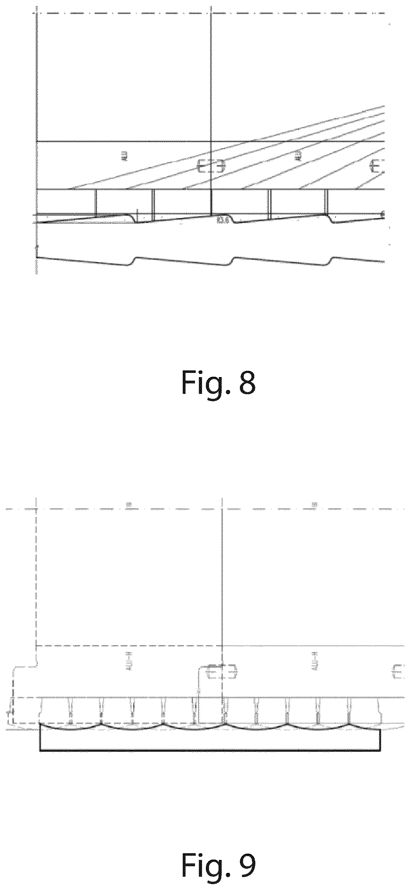

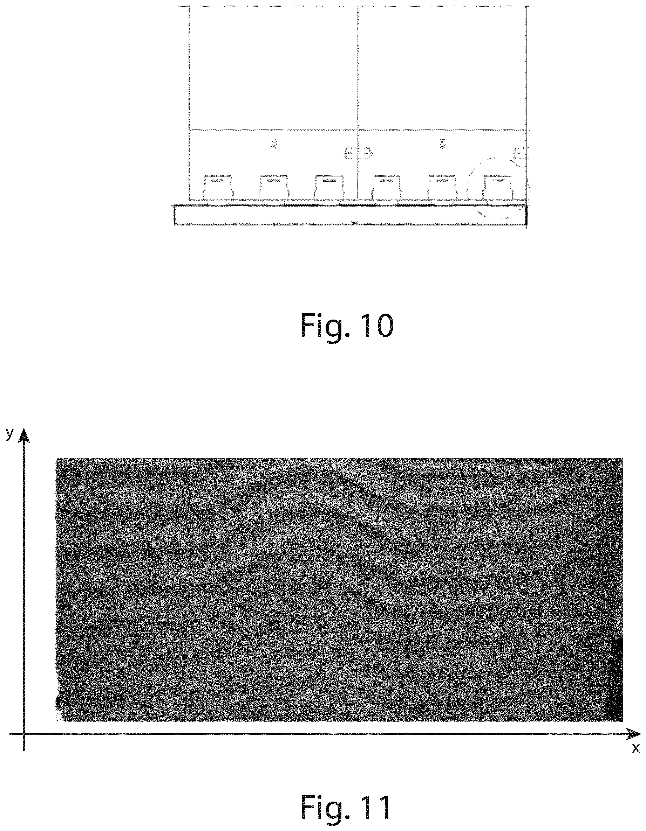

Referring to figures 8-10, it is possible to see shapes corresponding to tool shapes.

The operation of the machine M for processing wooden workpieces and the like, provided with image acquisition and processing program described above, is as follows.

When it is intended to perform a machining on a workpiece P by means of said machine M, reproducing an input data, said acquisition program scans or acquires said input data.

Said input data is processed by said processing program, which outputs the number of said machining groups 2 and the shape of the tools 21 to be used and the trajectories that each one has to follow to reproduce the input data, i.e., the laws of motion which move said tools 21.

If said machine M comprises only one machining group 2, said processing program is able to output the law of motion that said working group 2, and therefore said tool 21 has to follow in order to reproduce said input data I.

Said program also performs a simulation of the final processing, starting from the data identified in the previous steps.

This simulation can also be displayed on the machine M display or on remote devices.

Then a comparison is made between said simulation of the final machining and said input data.

This comparison can be performed manually by an operator or automatically by a hardware module.

If said comparison has a positive outcome, said machine M can perform the machining on said workpiece P, otherwise, it is necessary to proceed with the re-processing of the input data.

It is also possible that the machining of said workpiece P has to take place by carrying out several passages in the machine M of said piece P.

Said logic control unit U determines whether, on the basis of the number of working groups 2 selected, and the laws of motion that they have to follow, it is possible for said workpiece P to be machined by reproducing said input data I with a single passage in the machine M or with other subsequent steps.

As is evident from the above description, the machine M allows acquiring and processing input data corresponding to real images or samples to be reproduced, and also simulating the final machining that will be performed on a workpiece P, and possibly displaying said simulation.

Therefore said machine M allows carrying out really variable and non-predefined workings.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working workpieces (P) made of wood, metal, plastic, ceramic, glass, fiberglass for carrying out a working on said workpiece (P) reproducing an input data (I), as an image or a sample, comprising:
at least one working group (2) provided with at least one working tool (21) having a specific shape and capable of carrying out the working on said workpiece (P) according to specific trajectories, said working tool (21) moved according to specific laws of motion;
a working table (1) for supporting and moving said workpiece (P) to be worked, according to a forward direction (A), during the working process;
a logic control unit (U) provided with storage means in which links between said at least one working group (2) and the respective working operation that it can carry out on said workpiece (P) are stored;
said machine being **characterized in that** said logic control unit (U) is provided with a program for acquiring and processing said specific input data (I) capable of
acquiring said input data (I);
processing said input data (I) for extracting output data such as the law of motion that said at least one working group (2) has to follow for working said workpiece (P), so as to reproduce said input data (I) on said workpiece (P), and
carrying out the working of said workpiece (P).

2. Machine (M) according to the preceding claim, **characterized**
**in that** it comprises a plurality of working groups (2), and
**in that** said logic control unit (U) is capable of processing said input data (I) and extracting output data such as the number of working groups (2) and the law of motion that each one has to follow for working said workpiece (P), so as to reproduce said input data (I) on said workpiece (P).

3. Machine (M) according to any one of the preceding claims, **characterized in that** it comprises a working group (2) of the sanding group type for carrying out the working of said workpiece (P).

4. Machine (M) according to any one of the preceding claims, **characterized in that** it comprises a working group (2) of the gouger type comprising at least one cutting element (21).

5. Machine (M) according to the preceding claim, **characterized in that** it comprises said gouger group (2) comprising a plurality of cutting elements (21) arranged side by side, along a rotation axis (R), transversal to said forward direction (X).

6. Machine (M) according to any one of the preceding claims, **characterized in that** it comprises a plurality of working groups (2), arranged in series among each other, capable of making the working process determined by said logic control unit (U) during the sliding of said workpiece (P) according to said forward direction (A), so as to reproduce on said workpiece (P), said input data (I).

7. Machine (M) according to the preceding claim, **characterized in that** said logic control unit (U) is capable of extracting, as output data, the number of working operations that said plurality of working groups (2) has to reproduce on said workpiece (P) for reproducing on said workpiece (P) the working of said input data (I).

8. Operating method of a machine (M) for working workpiece (P) made of wood, metal, plastic, ceramic, glass, fiberglass for executing a working on said workpiece (P) reproducing an input data (I), as an image or a sample, as described according to any one of claims 1-7, comprising the following steps:
a. storing a link among a defined number of working groups (2) and the respective working operations that they can make on said workpiece (P);
b. providing an input data (I) as an image or a sample;
c. acquiring said input data (I);
d. processing said input data (I) so as to extract output data such as the number of working groups (2) necessary for the working operations so as to reproduce said input data (I);
e. processing said input data (I) so as to extract output data such as trajectories or laws of motion that said working groups (2), identified in said step d., have to follow so as to reproduce said input data (I);
f. providing a workpiece (P) to be worked;
g. carrying out the working of said workpiece (P).

9. Method according to the preceding claim, **characterized in that** it comprises the following further steps to carry out before said step f.:
e1. simulating the final working to carry out on said workpiece (P);
e2. comparing said simulated working in said step e1. and said input data (I);
e3. if said comparison carried out in said step e2. is positive, proceeding with said step f.

10. Method according to the preceding claim, **characterized in that** it further comprises the following step
e11. displaying said simulated working in said step e1.

11. Method according to any one of the preceding claims 8-10, **characterized in that** it comprises the further step:
e0. determining if said working on said workpiece (P) can be carried out in a single passage or in more passages of said workpiece (P) in said machine (M), so as to reproduce said input data (I).
